# EUROPEAN PATENT APPLICATION

(11) **EP 2 810 709 A1**
(43) Date of publication of application: **10.12.2014**
(21) Application number: 13170906.5
(22) Date of filing: 06.06.2013
(51) Int. Cl.: B01J 23/78, B01J 35/10, C01B 3/40

(54) **Catalyst composition for the production of syngas**

(71) Applicant: Saudi Basic Industries Corporation, Riyadh 11422 (SA)
(72) Inventor: Kartick, Chandra Mondal, Chikkadunnasandra 562125 Bangalore (IN); Vyas, Mayank Harishbhai, Gujarat (IN); Sasmal, Sankar, Gujarat (IN)
(74) Representative: Vroemen, Maurice

(57) **Abstract**

The invention is directed to a catalyst composition comprising a mesoporous catalyst support and oxides of nickel (Ni), cobalt (Co) and magnesium (Mg).
to a process for the production of the catalyst composition and to the use of the catalyst composition for the production of a syngas.

## Description

The present invention is directed to a catalyst composition, a process for the production of a catalyst composition and the use of a catalyst composition for the production of synthesis gas (syngas).

Syngas is a mixture of gases comprising varying amounts of hydrogen, carbon monoxide and carbon dioxide. Syngas is an important raw material used by the chemical industry and can be prepared from a variety of hydrocarbon materials, ranging from natural gas (methane), refinery gases, LPG, naphtha, heavy residues and even solid sources such as coal and petroleum coke.

Conversion processes used to obtain syngas include several variations of reforming; for example steam reforming, combined reforming, autothermal reforming and both catalytic and non-catalytic partial oxidation (gasification) processes. The choice of technology for syngas generation is strongly influenced by the available feedstock as well as the gas composition best suited to the downstream consuming process. Because of the availability, gas composition and low cost; the most widely used raw material to obtain synthesis gas is methane and/or natural gas.

Syngas can be converted into petrochemicals, higher alcohols and synthetic fuels. Syngas is used in a variety of downstream processes like the methanol production process, Fischer-Tropsch synthesis processes, carbonylation, hydrogenation, hydroformylation and other industrially important reactions.

Currently, the production of syngas is carried out by steam reforming of methane with the methane steam reforming (MSR) process. The MSR process involves following two equilibrium reactions:

CH₄ + 2H₂O ⇄ CO + 4H₂ - 54.2 kcal mol⁻¹ (1)

CO + H₂O ⇄ CO₂ + H₂ + 8.0 kcal mol⁻¹ (2)

This process is highly energy intensive and suffers from other limitations, such as poor selectivity for carbon monoxide due to the simultaneously occurring water-gas shift reaction (reaction 2), high H₂/CO molar ratio (≥ 5) and also low syngas productivity because of high steam/CH₄ ratio and low space velocity. This limits the use of this methane-to-syngas conversion process.

Auto thermal reforming (ATR) of methane or heavy hydrocarbons to syngas is also a well-established process [Kirk, R.E. and Othmer, D.F. Encyclopedia of Chemical Technology, vol. 12, 3rd Edn., New York, Wiley-Interscience, pp. 938-982]. ATR is mainly used for H₂ production from heavy hydrocarbons. This process involves combustion of part of the hydrocarbons by O₂ in flames or catalytic burner to produce CO₂ and water, which reform catalytically the remaining, uncombusted hydrocarbons into syngas. The ATR process does not require external energy but suffers from several drawbacks, such as high temperature operation in combustion (≅ 1900 °C) and catalytic steps (900° - 1100 °C) and large temperature and space velocity variations during start-up and shut-down, causing catalyst disintegration and carbon soot formation during the combustion, which makes the process operation difficult.

During the past decade, there has been increasing global concern over the rise of anthropogenic CO₂ emission into the Earth's atmosphere. Global carbon-dioxide (CO₂) emissions from fossil-fuel combustion reached a record high of 31.6 gigatonnes (Gt) in 2011, according to preliminary estimates from the International Energy Agency (IEA). Therefore, the recent focus has been on processes for the production of syngas wherein no CO₂ is produced and on the development of catalysts for use in this process. An example of such a process is catalytic carbon dioxide reforming of methane (CRM).

The focus has been on the study of the reaction between CO₂ and CH₄ to produce syngas, which can be used in chemical energy transmission systems or utilized in the Fischer-Tropsch reaction to produce liquids [J. R. H. Ross, A. N. J. Van Keulen, M. E. S. Hegarty, and K. Seshan, Catal. Today, 1996, 30, 193]. Reforming with CO₂, rather than with H₂O, is attractive because it can be employed in areas where water is not available and it yields syngas with a molar H₂/CO ratio of about 1, which is a preferable feedstock for the Fischer - Tropsch synthesis of long chain hydrocarbons [Gadalla, A. M. and Bower, B.; Chem. Eng. Sci., 1988, 43(11), 3049 - 3062]. In other situations, a combination of CO₂ and steam reforming may be advantageous.

Catalysts that can be used in a process for the catalytic carbon dioxide reforming of methane (CRM) are, for example, described in the following prior art documents. US7432222 (B2) discloses a high temperature stable, supported, non-noble metal catalyst NiCoₐCe_{b}Mg_{c}Y_{d}Oₓ/S, wherein S stands for macroporous solid support essentially comprising zirconium and hafnium oxides with less than 3 wt % silica and/or alumina. The catalyst is used for autothermal reforming or catalytic partial oxidation of hydrocarbon(s) to syngas.

US20090314993 (A1) relates to a composite metal oxide catalyst expressed by the formula Mₐ^{m+}N_{b}ⁿ⁺Al_{c}³⁺Mg_{d}²⁺O_{(am/2+bn/2+3c/2+d)}; wherein M and N are two transition metals from the group consisting of Ni, Co, Fe, Mn, Mo, Cu, Zn or mixtures thereof. The catalyst is used for the catalytic carbon dioxide reforming of methane.

Newnham et al., International Journal of Hydrogen Energy, 37 (2012) 1454-1464 discloses nanostructured Ni-loaded mesoporous alumina materials that are used for the catalytic carbon dioxide reforming of methane to syngas.

Leilei Xu et al., Applied catalysis B, 108 (2011) 177-190 discloses mesoporous NiO-MgO-Al₂O₃ catalysts used for the catalytic carbon dioxide reforming of methane to syngas.

A disadvantage of the catalysts described above is that carbon deposition on the catalysts during syngas production is high, which leads to a lower time-on-stream for these catalysts.

The aim of the present invention is to provide a catalyst composition wherein the carbon deposition on the catalyst during the syngas production is low and which catalyst composition leads to a high conversion of feed gases to syngas.

The invention is characterized by a catalyst composition comprising a mesoporous catalyst support and oxides of nickel (Ni), cobalt (Co) and magnesium (Mg).

An advantage of the catalyst composition according to the invention is that a H₂/CO molar ratio in the syngas can be obtained which is higher than 0.9.

Another advantage of the catalyst according to the invention is that a thermal stable catalyst composition is obtained which is active for a long time.

A further advantage of the catalyst composition according to the invention is that the dispersion of the active metals in the catalyst composition is high.

The catalyst composition comprises a mesoporous catalyst support. A mesoporous catalyst support is defined as a catalyst support containing pores with diameters between 2 and 50 nm. Porous materials are classified into several classes by their pore diameter. According to IUPAC notation, microporous materials have pore diameters of less than 2 nm and macroporous materials have pore diameters of greater than 50 nm; the mesoporous category thus lies in the middle. The advantage of using a mesoporous catalyst support is that in such a support the dispersion of the metals that are present in the catalyst composition is high; resulting in a high catalyst activity. Further, the use of a mesoporous support prevents the metals in the catalyst from sintering. Typical mesoporous materials include silica and/or alumina. Further examples are mesoporous oxides of niobium, tantalum, titanium, zirconium, cerium and tin. The mesoporous material can be disordered or ordered in a mesostructure. A procedure for producing mesoporous materials is, for instance, described in US 3493341. The mesoporous catalyst support preferably comprises alumina.

Further the catalyst composition comprises oxides of nickel (Ni), cobalt (Co) and magnesium (Mg).

The amount of nickel in the catalyst composition preferably is higher than 0.01 mol% relative tothe catalyst composition; more preferably higher than 0.05 mol %, most preferably higher than 0.1 mol%. The amount of nickel in the catalyst composition preferably is lower than 2 mol% relative to the catalyst composition; more preferably is lower than 1 mol% and most preferably is lower than 0.7 mol %.

The amount of cobalt in the catalyst composition preferably is higher than 0.01 mol%% relative to the catalyst composition; more preferably higher than 0.05 mol %, most preferably higher than 0.1 %. The amount of cobalt in the catalyst composition preferably is lower than 2 mol% relative to the catalyst composition; more preferably is lower than 1 mol% and most preferably is lower than 0.7 mol%.

Preferably, the molar ratio between the amounts of nickel and cobalt in the catalyst composition is 5:1 to 1:5, preferably 3:1 to 1:3, more preferably 2:1 to 1:2.

The amount of magnesium in the catalyst composition preferably is higher than 0.05 mol% relative to the catalyst composition; more preferably higher than 0.1 mol%%, most preferably higher than 0.3 mol%. The amount of magnesium in the catalyst composition preferably is lower than 2.5 mol%% relative to the catalyst composition; more preferably is lower than 1.5 mol%% and most preferably is lower than 1.2 mol%. The catalyst composition can, optionally, also contain small amounts of promoters. Examples of promoters are lanthanum (La) or cerium (Ce). The amount of promoter that can be used is preferably higher than 0.001 mol%% relative tothe catalyst composition; more preferably higher than 0.002 mol %, most preferably higher than 0.003%. The amount of promoter in the catalyst composition preferably is lower than 0.5 mol% relative tothe catalyst composition; more preferably is lower than 0.3 mol% and most preferably is lower than 0.2 mol%.

The invention is also directed to a process for the production of a catalyst composition wherein a mesoporous catalyst support is impregnated with a solution comprising salts of Ni, Co and Mg, followed by drying and calcining at a temperature above 500 °C.

In a preferred embodiment of the invention, the catalyst composition can be prepared by adding a solution comprising salts of Ni, Co and Mg to a solution comprising a salt of at least one element from the group consisting of aluminum, silicon, niobium, tantalum, titanium, zirconium, cerium and tin, and a micelle-forming polymer, followed by mixing, heating, drying and calcining at a temperature above 500 °C.

During the production of the catalyst composition oxides of the elements will be formed that will together form the mesoporous support. During the preparation of the catalyst composition the solution preferably comprises a salt of aluminum.

The mesoporous catalyst support preferably comprises alumina.

The salts of Ni, Co, Mg and Al can be chosen from, for example, nitrates, oxides, chlorides or mixtures and combinations thereof. A solution of the salts can be formed in water or in an organic solvent, for example an alcohol. Examples of alcohols are primary alcohols, for example methanol and ethanol.

Micelles are polymers (surfactants) that arrange themselves in a spherical form in a polar solution. A micelle-forming surfactant can be classified according to their polar head group. A non-ionic surfactant has no charge groups in its head. The head of an ionic surfactant carries a net charge. If the charge is negative, the surfactant is more specifically called anionic; if the charge is positive, it is called cationic. If a surfactant contains a head with two oppositely charged groups, it is termed zwitterionic. Anionic surfactants contain anionic functional groups at their head, such as sulfate, sulfonate, phosphate, and carboxylate. Alkyl sulfates include ammonium lauryl sulfate, sodium lauryl sulfate, sodium dodecyl sulfate(SDS) and the related alkyl-ether sulfates; sodium laureth sulfate, also known as sodium lauryl ether sulfate (SLES), and sodium myreth sulfate. Carboxylates are the most common surfactants and comprise the alkyl carboxylates (soaps), such as sodium stearate. More specialized species include sodium lauroyl sarcosinate and carboxylate-based fluorosurfactants such as perfluorononanoate, perfluorooctanoate (PFOA or PFO). Examples of cationic surfactants are primary, secondary, or tertiary amines, cetyl trimethylammonium bromide (CTAB) a.k.a. hexadecyl trimethyl ammonium bromide, cetyl trimethylammonium chloride (CTAC), cetylpyridinium chloride (CPC), benzalkonium chloride (BAC), benzethonium chloride (BZT), 5-bromo-5-nitro-1,3-dioxane, dimethyldioctadecylammonium chloride and dioctadecyldimethylammonium bromide (DODAB). Zwitterionic surfactants have both cationic and anionic centers attached to the same molecule. The cationic part is based on primary, secondary, or tertiary amines or quaternary ammonium cations. The anionic part can be more variable and include sulfonates, as in 3-[(3-cholamidopropyl)dimethylammonio]-1-propanesulfonate (CHAPS). Other anionic groups are sultaines, betaines and phosphates. As non-ionic surfactants can be mentioned fatty alcohols, polyoxyethylene glycol alkyl ethers, polyoxypropylene glycol alkyl ethers, glucoside alkyl ethers, polyoxyethylene glycol octylphenol ethers (e.g. Triton® X-100), polyoxyethylene glycol alkylphenol ethers, glycero alkyl esters, polyoxyethylene glycol sorbitan alkyl esters, sorbitan alkyl esters, cocamide MEA, cocamide DEA, dodecyldimethylamine oxide, block copolymers of polyethylene glycol and polypropylene glycol (Pluronic®) and polyethoxylated tallow amine (POEA).

Preferably , a non-ionic surfactant is used as the micelle-forming polymer, more preferably the micelle-forming polymer is a block copolymer of polyethylene glycol and polypropylene glycol, most preferably the micelle-forming polymer is Pluronic® P123.

The process of forming a mesoporous catalyst by using a micel-forming polymer as a template is also known as template assisted crystallization.

The impregnation of the mesoporous catalyst support with the metal salt solution can be performed by impregnation or diffusion. The impregnation is preferably performed by incipient wetness impregnation (IW or IWI), also called capillary impregnation or dry impregnation. This is a commonly used technique for the synthesis of heterogeneous catalysts. The metal salt solution is added to a mesoporous catalyst support containing the same pore volume as the volume of the solution that was added. Capillary action draws the solution into the pores. Solution added in excess of the support pore volume causes the solution transport to change from a capillary action process to a diffusion process, which is much slower. The obtained catalyst can thereafter be dried and calcined to drive off the volatile components within the solution and depositing the metal on the catalyst surface.

Drying is normally performed at room temperature (about 20 °C) to a slightly elevated temperature with a maximum of 75 °C, preferably a maximum of 50 °C. Calcining can be performed at a temperature above 500 °C, preferably at a temperature above 750 °C. The temperature during calcining preferably is lower than 1200 °C, more preferably lower than 1000 °C. Calcining can be performed in one stage at one temperature or at two stages at two different temperatures. When calcining is performed in two stages the first heating temperature is preferably lower than the second heating temperature. Calcining is performed for at least one hour, preferably for at least 2 hours, more preferably for at least 4 hours. Preferably, calcining is performed by first heating at a temperature between 500 and 750 °C for at least 2 hours, followed by heating at a temperature between750 and 2000 °C, preferably between 750 and 1500 °C for at least 2 hours.

Mixing is, for example, performed by vigorous stirring. Heating is performed at a temperature between 25 and 150 °C, preferably between 25 and 110 °C. Optionally, grinding is used to transform the solid catalyst composition into a fine powder. A grinding machine can be used for this purpose.

The invention is also directed to the use of a catalyst composition according to the invention in a process for the production of a syngas. Syngas can be produced starting from methane, carbon dioxide and/or water. There are several known processes for the production of syngas. For example, methane steam reforming (MSR) process, the Auto thermal reforming (ATR) of methane or heavy hydrocarbons and the catalytic carbon dioxide reforming of methane (CRM).

When using the catalyst composition according to the invention, preferably, the process for the production of syngas is catalytic carbon dioxide reforming of methane (CRM). During the catalytic carbon dioxide reforming the temperature preferably is between 500 and 1000 °C, more preferably between 750 and 850 °C; the pressure is 1 to 5 bar, preferably 1 bar; the gas hourly space velocity is preferably between 1000 to 50,000 cm³g-1⁻¹h⁻¹, more preferably between 5000 and 50,000 cm³g⁻¹h⁻¹, most preferably between 10,000 cm³g⁻¹h⁻¹ and 30,000 cm³g⁻¹h⁻¹.

During the syngas production process a gas mixture i obtained with a high H₂/CO molar ratio. Preferably, a H₂/CO molar ratio between 0.85 and 1.00 is obtained, more preferably a H₂/CO molar ratio in the syngas is obtained which is higher than 0.9.

With the catalyst according to the invention a high conversion of methane to syngas can be obtained. Preferably, the conversion of methane is above 70 mol%, preferably above 80 mol%.

The invention will hereafter be elucidated by the following examples, without however being limited thereto.

### Comparative experiments 1-9

### Catalyst preparation by impregnation

A supported catalyst was prepared by depositing mixed nitrates of Co, Ni and/or Mg from their aqueous solution on catalyst carrier using an incipient wetness impregnating technique. A catalyst support according to Table I was used. Each catalyst support was treated with an aqueous solution comprising 0.36 mol% of Co, and, where appropriate, 0.36 mol% of Ni and, where appropriate 0.74 mol% wt% of Mg, followed by drying and calcining in air first at 600 °C for 4 h and thereafter at 900 °C for 4 h. The molpercentages of the metals were relative to the catalyst composition.

### Examples 10-12

### Mesoporous alumina supported catalyst preparation by template assisted crystallization

A mesoporous alumina containing Co, Ni, Mg was synthesized using a template assisted crystallization. A promoter, such as Lanthanide (La) or Cesium (Cs) was, optionally, added. In a typical synthesis 4 gram of Pluronic^{®} P123 was dissolved in ethanol under stirring at room temperature, before 8.5 g of aluminum isopropoxide (Al(OPri)₃) was added to the solution. Metal precursor solution was made separately by dissolving metal nitrates in primary alcohol and conc. HNO₃. The amounts of the nitrates of Co, Ni or Mg were respectively 0.36 mol%, 0.36 mol% and 0.74 mol% relative to alumina (Al₂O₃). The latter solution was added to the Pluronic^{®} P123 solution under vigorous stirring. The mixture was stirred further for 2 h. The final slurry was transferred into a polypropylene bottle and heated in an oven for 12 h at 90 °C. The temperature of the polypropylene bottle was brought down to 50 °C and the bottle was uncapped overnight to permit the remaining ethanol to evaporate. The obtained solid sample was ground to a fine powder with a particle size between 250 and 500 micron and calcined first at 600 °C for 4 h under static air and then 900 °C for 4 h. For the synthesis of the catalysts according to example 11 and 12, the same procedure was followed using a different alcohol medium.

### Study of CO₂ reforming of methane to syngas reaction

The CO₂ reforming reaction over the catalysts was carried out at atmospheric pressure by passing continuously, a gaseous feed containing pure methane and carbon dioxide (CO₂/CH₄ mole ratio = 1.1) over the catalyst (0.3 g) packed in a quartz tubular reactor (internal diameter = 9 mm), provided with a thermocouple in the catalyst bed, at a GHSV (gas hourly space velocity, measured at 0 °C, and 1 atm pressure) of 20,000 cm³g⁻¹h⁻¹ and a temperature of 850 °C. After attaining the reaction steady state, the reaction products were analyzed by a gas chromatograph with thermal conductivity detector using a HP plot column. The carbon deposited on the catalyst during the reaction was determined by oxidizing it to CO₂ in a flow of air (60 cm³/min) for a period of 1 h at 700 °C, and measuring quantitatively the amount of CO₂ produced by absorbing it in barium hydroxide solution forming barium carbonate, which was then estimated gravimetrically. Reduction of the catalysts was performed at 800 °C for 1 h in presence of 50:50 N₂ : H₂ before starting the reaction.

The results of the CO₂ reforming of methane to syngas are given in Table 1. The results in Table 1 show that the carbon deposition on the catalysts 10, 11 and 12 is very low compared to the carbon deposition on the catalysts 4, 5 and 6 of the comparative experiments. Further the use of the catalyst compositions 10, 11 and 12 lead to a high conversion of feed gases to syngas and a H₂/CO molar ratio in the syngas is obtained which is higher than 0.9.

The stability of catalyst 10 and 11 was tested for more than 100 hours. The result of these tests are shown in figures 1 and 2. Figures 1 and 2 show that catalysts 10 and 11 are thermal stable for more than 100 hours time-on-stream.

Table 3 shows the effect of the promoters La and Ce that are present in various amounts in catalyst number 10. The same reaction conditions as for the results of Table 1 are used. By using the promoters the CH₄ conversion and the CO₂ conversion can be enhanced over the CH₄ conversion and the CO₂ conversion of catalyst number 10 without promoter.

### Study of CO₂ reforming of methane to syngas reaction in presence of steam

The CO₂ reforming of methane in the presence of steam over the catalyst (0.3 g) packed in a quartz tubular reactor (internal diameter = 9 mm), was carried out at atmospheric pressure by passing continuously. The feed was a mixture of pure methane (>99.95%) and CO₂ (>99.99%), with steam. Water vapor was added to the feed using a SAGE syringe pump and a specially designed evaporator. Before carrying out the reaction, the catalyst was heated in situ at 850 °C in a flow (50 cm³.min⁻¹) of moisture-free nitrogen for 1 h and then reduced by hydrogen (5% H₂ in N₂) at 800 °C for 1 h. The catalytic reactions were carried out at 850 °C, gas hourly space velocity (GHSV) of 20,000 cm³g⁻¹h⁻¹ (measured at 0 °C at 1 atm) and the relative concentrations of methane, steam, CO₂ in the feed were; CO₂/H₂O = 0.4 and CO₂ / CH₄= 0.3. After carrying out the reaction for a period of 1 h, the product gases (after condensation of the water from them at 0 °C) were analyzed by online-gas chromatography with

TCD, using a Hp plot Q column and He as the carrier gas. The C, H, and O balance across the reactor was within 2- 6%. All experiments with larger errors in the material balances were rejected. The H₂ and CO selectivity reported are based on the methane conversion alone. Reduction of the catalysts was performed at 800 °C for 1 h in presence of 50:50 N₂ : H₂ before starting the reaction.

The stability of catalyst 10 was tested for more than 100 hours. The result of this test is shown in figure 3. The structure of catalyst 10 was tested by low angle X-ray diffraction after 100 hours of reforming. This test showed that the mesoporous structure of the catalyst still existed after 100 hours of reforming time.

**Table 1:**

| Comparisons of catalyst performance in CO₂ reforming of methane to syngas over supported catalysts | | | | | | | | | | | | |
|---|---|---|---|---|---|---|---|---|---|---|---|---|
| Ex | Catalyst | TOS (h) | After 1 h of TOS | | | | End of TOS | | | | BET surface area (m²g⁻¹) | Carbon deposition (g_{c}g_{cat}⁻¹h⁻¹) |
| | | | CH₄ conv. (%) | CO₂ conv. (%) | H₂ sel (%) | H₂/CO | CH₄ conv. (%) | CO₂ conv. (%) | H₂ sel (%) | H₂/CO | | |
| 1 | CoMgOx/α-Al₂O₃ | 4 | 1.7 | 4.5 | 100.0 | 0.49 | 1.8 | 5.1 | 100.0 | 0.47 | - | - |
| 2 | CoNiOx/ α-Al₂O₃ | 9 | 86.7 | 86.2 | 100.0 | 0.94 | 83.8 | 85.2 | 92.9 | 0.86 | - | - |
| 3 | CoNiOx/MgOx/ α-Al₂O₃ | 9 | 81.7 | 84.6 | 94.3 | 0.88 | 79.7 | 83.7 | 94.1 | 0.87 | - | - |
| 4 | CoNiMgOₓ/α-Al₂O₃ | 9 | 84.7 | 86.7 | 97.2 | 0.91 | 86.2 | 87.1 | 97.3 | 0.91 | 11.2 | 4 x 10⁻³ |
| 5 | CoNiMgOₓ/γ Al₂O₃ | 8 | 88.6 | 87.1 | 97.3 | 0.92 | 90.4 | 87.8 | 97.4 | 0.93 | 80.4 | 2 x 10⁻³ |
| 6 | CoNiMgOₓ/SiO₂ | 8 | 93.5 | 89.8 | 97.5 | 0.95 | 86.2 | 86.2 | 97.3 | 0.92 | - | 1 x 10⁻³ |
| 7 | CoNiMgOₓ/SiO₂-Al2O₃ | 8 | 60.4 | 68.0 | 92.2 | 0.81 | 35.8 | 50.1 | 73.8 | 0.58 | - | |
| 8 | CoNiMgOₓ/ZrO₂ | 8 | 93.2 | 89.9 | 98.0 | 0.95 | 80.0 | 82.5 | 88.5 | 0.83 | - | 3 x 10⁻³ |
| 9 | CoNiMgOₓ | 7 | 56.2 | 67.0 | 87.5 | 0.75 | 67.4 | 74.6 | 86.1 | 0.77 | - | - |
| 10 | CoNiMgOₓ-MAI (Prepared by using EtOH medium) | 10 | 90.5 | 88.5 | 97.4 | 0.92 | 91.7 | 89.5 | 97.4 | 0.93 | 136.4 | 4 x 10⁻⁴ |
| 11 | CoNiMgOₓ-MAI (Prepared by using MeOH medium) | 7 | 91.0 | 88.3 | 97.4 | 0.94 | 93.5 | 90.2 | 96.3 | 0.93 | 36.9 | 9 x 10⁻⁴ |
| 12 | CoNiMgOₓ-MAI (Prepared by using Isopropanol medium) | 6 | 88.8 | 87.0 | 97.4 | 0.94 | 89.4 | 88.0 | 94.8 | 0.91 | 124.6 | 3 x 10⁻⁴ |

| | | | | | | | | | | | | |
|---|---|---|---|---|---|---|---|---|---|---|---|---|
| TOS = time on stream; H₂ sel = H₂ selectivity; conv.= conversion; MAi= mesoporous alumina | | | | | | | | | | | | |

**Table 2: Textural properties of the catalysts according to examples 10-12**

| Ex. | **Catalyst** | **BET surface area (m²g⁻¹)** | **Pore volume (cm³g⁻¹)** | **BJH pore diameter (nm)** | **Carbon deposition (g_{c}g_{cat}⁻¹h⁻¹)** |
|---|---|---|---|---|---|
| 13 | Catalyst 10: CoNiMgO_{X}-MAI (Prepared by using EtOH medium) | 136.5 | 0.4096 | 9.3 | 4 x 10⁻⁴ (105 h of TOS) |
| 14 | Catalyst 11: CoNiMgO_{X}-MAI (Prepared by using MeOH medium) | 36.9 | 0.0916 | 6.2 | 9 x 10⁻⁴ (106 h TOS) |
| 15 | Catalyst 12: CoNiMgO_{X}-MAI (Prepared by using Isopropanol medium) | 124.6 | 0.406 | 9.8 | 3 x 10⁻⁴ (11 h of TOS) |

| | | | | | |
|---|---|---|---|---|---|
| MAI= mesoporous alumina | | | | | |

**Table 3: Effect of promoters on the performance of catalyst 10**

| Ex | Catalyst | Promoter | TOS (h) | After 1 h of TOS | | | | End of TOS | | | |
|---|---|---|---|---|---|---|---|---|---|---|---|
| | | | | CH₄ conv .(%) | CO₂ conv .(%) | H₂ sel (%) | H₂/CO | CH₄ conv. (%) | CO₂ conv .(%) | H₂ sel (%) | H₂/CO |
| 16 | CoNiMgOₓ -MAI | 0.5 wt % La | 11 | 91.2 | 86.7 | 97. 3 | 0.91 | 94.1 | 91.3 | 96. 1 | 0.92 |
| 17 | CoNiMgOₓ -MAI | 1 wt % La | 10 | 90.5 | 89.5 | 98. 7 | 0.90 | 92.4 | 89.7 | 97. 4 | 0.93 |
| 18 | CoNiMgOₓ -MAI | 0.5 wt % Ce | 11 | 81.1 | 85.4 | 97. 1 | 0.90 | 91.9 | 93.7 | 97. 4 | 0.91 |
| 19 | CoNiMgOₓ -MAI | 1 wt % Ce | 8 | 91.5 | 91.9 | 98. 7 | 0.91 | 91.9 | 92.4 | 98. 7 | 0.92 |

| | | | | | | | | | | | |
|---|---|---|---|---|---|---|---|---|---|---|---|
| TOS = time on stream; H₂ sel = H₂ selectivity; conv. = conversion; MAI= mesoporous alumina | | | | | | | | | | | |

## Claims

1. Catalyst composition comprising a mesoporous catalyst support and oxides of nickel (Ni), cobalt (Co) and magnesium (Mg).

2. Catalyst composition according to claim 1, wherein the catalyst support comprisesalumina.

3. Catalyst composition according to claim 1 or 2, wherein the amount of Ni is between 0.01 and 2 mol% relative to the catalyst composition..

4. Catalyst composition according to any one of claims 1-3, wherein the amount of Co is between 0.01 and 2 mol% relative to the catalyst composition..

5. Catalyst composition according to any one of claims 1-4, wherein the amount of Mg is between 0.05 and2.5 mol% relative to the catalyst composition..

6. Catalyst composition according to any one of claims 1-5, wherein lanthanum (La) and/or cerium (Ce) are present in an amount lower than 0.5 mol%.

7. Process for the production of a catalyst composition according to any one of claims 1-6, wherein a solution comprising salts of Ni, Co and Mg is added to a solution comprising) a salt of at least one element from the group consisting of aluminum, silicon, niobium, tantalum, titanium, zirconium, cerium and tin,and a micelle-forming polymer, followed by mixing, heating, drying and calcining at a temperature above 500 °C.

8. Process according to claim 7, wherein the micelle-forming polymer is Pluronic ® P123.

9. Process according to claim 7 or 8, wherein the solution comprises a salt of aluminum.

10. Process according to any one of claims 7-9, wherein the calcining is performed by first heating at a temperature between500 and 750 °C for at least 2 hours, followed by heating at a temperature between750 and 2000 °C for at least 2 hours.

11. Use of a catalyst composition according to any one of claims 1-6 in a process for the production of a syngas.

12. Use of a catalyst composition according to claim 11, wherein the process for the production of a syngas is catalytic carbon dioxide reforming of methane (CRM).

13. Use of a catalyst composition according to claim 11 or 12, wherein the gas hourly space velocity is between 1000 to 50,000 cm³g-1⁻¹h⁻¹ at a temperature between 500 and 1000 °C.

14. Use according to any one of claims 11-13, wherein a gas mixture is obtained with a H₂/CO molar ratio between 0.85 and 1.00.

15. Use according to any one of claims 11-14, wherein the conversion of methane is above 70 mol%.
